# EUROPÄISCHE PATENTSCHRIFT

(11) **EP 0 635 134 B1**
(45) Veröffentlichungstag und Bekanntmachung des Hinweises auf die Patenterteilung: **18.09.1996**
(21) Anmeldenummer: 93907836.6
(22) Anmeldetag: 26.03.1993
(51) Int. Cl.: G01P 3/487

(54) **MESSANORDNUNG ZUR BERÜRUNGSLOSEN DREHZAHLERFASSUNG**
NON-CONTACT DEVICE FOR RPM MEASUREMENT
SYSTEME DE MESURE POUR DETERMINER LA VITESSE DE ROTATION SANS CONTACT

(30) Priorität: 08.04.1992 DE 4211704
(43) Veröffentlichungstag der Anmeldung: 25.01.1995
(73) Patentinhaber: ELSTER PRODUKTION GMBH, D-55252 Mainz-Kastel (DE)
(72) Erfinder: LÖTZ-DAUER, Volker, D-6200 Wiesbaden (DE); KETTNER, Thomas, D-6251 Netzbach (DE)
(74) Vertreter: Harlacher, Mechthild
(86) Internationale Anmeldenummer: EP9300743
(87) Internationale Veröffentlichungsnummer: WO9321535

(56) Entgegenhaltungen:
- EP-A- 0 034 821
- DE-A- 3 140 302
- DE-A- 3 621 778
- US-A- 4 319 151

## Beschreibung

Die Erfindung betrifft eine Meßanordnung zur berührungslosen Erfassung der Drehzahl eines auf einer Welle angeordneten Bauteiles, mit mehreren umlaufenden, radial ausgerichteten Magneten, in deren Magneffeldern ein stationärer Impulsdrahtsensor angeordnet ist.

Eine derartige Meßanordnung ist aus der DE 3 621 778 A1 bekannt.

Ein elektromagnetischer Drehzahlgeber weist einen Spulenkern auf, der mit seiner Längsachse senkrecht zur Drehachse einer Welle angeordnet ist. Mit der Welle ist mindestens ein Dauermagnet so verbunden, daß seine Magnetisierungsrichtung mit der Richtung der Längsachse übereinstimmt. Nachteilig ist eine ungleichmäßige Feldverteilung, so daß nur ein Teil des Spulenkerns zur Impulserzeugung genutzt wird.

Aus der US 4 319 151 A1 ist ein Impulsgeber bekannt, dessen Signale ein Maß für die Drehbewegung oder Drehrichtung darstellen sollen. Dieser Impulsgeber weist zwei axial gegeneinander versetzte Dauermagnete auf, die in der Welle eines routierenden Teils eingebracht sind und zwar parallel zur Drehachse. Der Impulsdrahtsensor ist achsparallel zu den Magneten angeordnet.

Weiterhin ist aus der Praxis ein Impulsdrahtsensor bekannt, der durch die Magneffelder mehrerer Magneten angesteuert wird, die am Umfang eines sich drehenden Bauteiles angeordnet sind. Ein Impuls wird ausgelöst, wenn die zum Sensor parallelen Komponenten der Magneffelder einen bestimmten Minimalwert überschreiten.

Nach den bekannten Induktionsgesetzen erzeugen bewegte Magneffelder in ihrer Umgebung in leitenden Flächen einen sich ändernden magnetischen Fluß, der Wirbelströme erzeugt. Diese stellen, ähnlich der mechanischen Lagerreibung, eine elektrische Verlustleistung dar.

Bei bestimmten Anwendungsfällen wirken sich die Wirbelströme störend aus: Beispielsweise steht bei Turbinenrad-Gaszählern bei minimalem Durchfluß nur noch ein sehr kleines Antriebsmoment zur Drehung des Meßrades zur Verfügung. Die Wirbelströme führen hier zu Meßfehlern im unteren Meßbereich.

Demgemäß besteht die Aufgabe der Erfindung darin, eine Meßanordnung der eingangs genannten Art zu schaffen, die drehzahlunabhängig zuverlässige Meßwerte liefert, und zwar insbesondere im unteren Meßbereich.

Diese Aufgabe wird durch die Merkmale des Anspruches 1 gelöst.

Durch die Überlagerung der Einzelfelder der abwechselnd gegensätzlich gepolten Magnete ergibt sich eine große zum Impulsdrahtsensor achsparallele Feldkomponente bei insgesamt kleinem Streufeld nach außen. Die Feldstärke der Magneten kann daher klein gewählt werden.

Die Meßanordnung arbeiten drehzahlunabhängig, d. h. eine Mindestdrehzahl ist nicht erforderlich, so daß der Meßbereich groß ist.

Die Position des Impulsdrahtsensors zu den Magneten ist problemlos auf die Signalhöhe hin optimierbar. Ebenso der Abstand der Magnete zueinander.

Die Meßanordnung gibt ohne Stromversorgung eine hohe Impulsspannung ab, die sich störungsfrei zu einer Auswerte- und Anzeigeelektronik übertragen läßt.

Es ist besonders vorteilhaft, zwei Stabmagnete zu verwenden, die parallel zueinander ausgerichtet sind.

Eine weitere vorteilhafte Weiterbildung der Erfindung besteht darin, daß die Magnete in die Welle des Bauteiles eingebracht sind.

Dadurch wird die vom magnetischen Fluß durchsetzte Fläche auf ein Minimum beschränkt. Die Anordnung stellt eine lagetoleranzunkritische Ansteuerung des Impulsdrahtsensors sicher, bei gleichzeitiger Minimierung der Wirbelströme.

Die Erfindung wird anhand eines Anwendungsfalles der erfindungsgemäßen Meßanordnung im Zusammenhang mit der Zeichnung näher erläutert.
Fig. 1 zeigt einen Schnitt durch eine Meßanordnung in einem Turbinenrad-Gaszähler;
Fig. 2 zeigt schematisch den Magnetfeldverlauf der Meßanordnung.

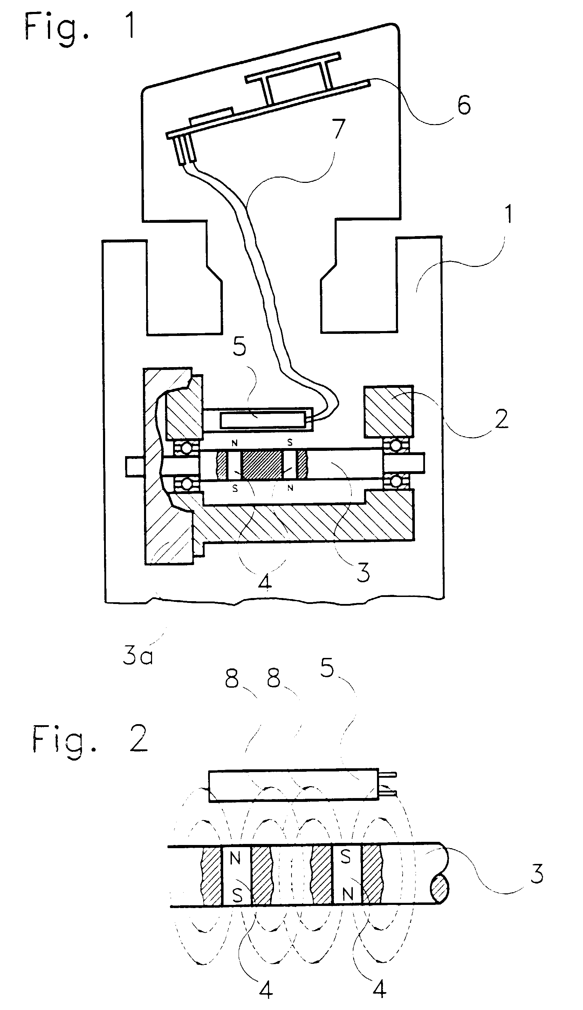

In Fig. 1 befindet sich in einem Gehäuse 1 ein Lagerkörper 2, in dem eine Meßradwelle 3 eines Meßrades 3 a gelagert ist. Zwei Stabmagnete 4 sind mit Abstand zueinander derart in die Meßradwelle 3 eingebracht, daß ihre Pole N, S radial ausgerichtet sind. Die Magnete 4 stehen im wesentlichen parallel zueinander und sind gegensätzlich gepolt.

Ein Impulsdrahtsensor 5 ist parallel zur Drehachse der Meßradwelle 3 in einer auf die Signalhöhe optimierten Position zu den Stabmagneten 4 angeordnet. Der Impulsdrahtsensor 5 ist mit einer Auswerte- und Anzeigeelektronik 6 mittels Leitungen 7 verbunden.

Wie in Fig. 2 schematisch dargestellt ist, beaufschlagen die beiden Magnetfelder 8 gleichzeitig den Impulsdrahsensor 5. Dadurch ergibt sich eine Überlagerung der Einzelfelder der Magnete 4, wodurch eine große achsparallele Feldkomponente entsteht, die den Sensor zuverlässig ansteuert, bei insgesamt kleinem Streufeld nach außen.

Durch die Einbringung der Stabmagnete 4 in die Meßradwelle 3 wird die vom magnetischen Fluß durchsetzte Fläche auf ein Minimum beschränkt. Da die Drehachse durch die Magnete 4 hindurchgeht, wird bei einer Drehung nur eine kleine Fläche überschnitten, so daß Wirbelströme minimiert werden.

## Patentansprüche

1. Meßanordnung zur berührungslosen Erfassung der Drehzahl eines auf einer Welle angeordneten Bauteiles, mit mehreren umlaufenden, radial ausgerichteten Magneten, in deren Magneffeldern ein stationärer Impulsdrahtsensor angeordnet ist,
dadurch gekennzeichnet,
daß die Magnete (4) in axialem Abstand zueinander und abwechselnd gegensätzlich gepolt derart angeordnet sind, daß die Überlagerung der Einzelfelder eine große achsparallele Feldkomponente ergibt, die den parallel zur Drehachse der Welle (3) angeordneten Impulsdrahtsensor (5) beaufschlagt.

2. Meßanordnung nach Anspruch 1,
dadurch gekennzeichnet,
daß zwei Stabmagnete (4) verwendet werden, die parallel zueinander ausgerichtet sind.

3. Meßanordnung nach Anspruch 1 oder 2
dadurch gekennzeichnet,
daß die Magnete (4) in die Welle (3) des Bauteiles (3 a) eingebracht sind.

## Claims

1. Non-contact device for measuring the rotational speed of a component arranged on a shaft, with several circumferential radially aligned magnets in whose magnetic fields a stationary pulse-wire sensor is arranged,
characterised in that
the magnets (4) are arranged at an axial distance to each other and alternately with opposite poles so that the superposition of the individual magnetic fields produces a large axis-parallel field component which acts on the pulse-wire sensor (5) arranged parallel to the rotary axis of the shaft (3).

2. Device according to claim 1,
characterised in that
two bar magnets (4) are used which are aligned parallel to each other.

3. Device according to claim 1 or 2,
characterised in that
the magnets (4) are inserted in the shaft (3) of the component (3a).

## Revendications

1. Système de mesure pour déterminer la vitesse de rotation sans contact d'un composant disposé sur un arbre, avec plusieurs aimants circonférentiels alignés radialement, dans les champs desquels est disposé un capteur d'impulsions à fil, caractérisé par le fait que les aimants (4) sont disposés à une distance axiale les uns par rapport aux autres et avec une polarisation opposée alternante de la sorte que la superposition des champs individuels résulte dans un grand composant de champs parallèle à l'axe produisant un effet sur le capteur d'impulsions à fil (5) disposé parallèlement à l'axe de rotation de l'arbre (3).

2. Système de mesure selon la revendication 1, caractérisé par le fait que deux barreaux aimantés (4) alignés parallèlement l'un par rapport à l'autre sont utilisés.

3. Système de mesure selon l'une des revendications 1 ou 2, caractérisé par le fait que les aimants (4) sont insérés dans l'arbre (3) du composant (3a).
